# EUROPÄISCHE PATENTSCHRIFT

(11) **EP 3 741 033 B1**
(45) Veröffentlichungstag und Bekanntmachung des Hinweises auf die Patenterteilung: **27.07.2022**
(21) Anmeldenummer: 19702535.6
(22) Anmeldetag: 18.01.2019
(51) Int. Cl.: H02K 15/02, B32B 15/01, H01F 41/02

(54) **VERFAHREN ZUM VERBINDEN VON BLECHTEILEN ZU EINEM BLECHPAKET**
METHOD FOR CONNECTING SHEET METAL TO A STACK OF SHEETS
PROCÉDÉ DE LIAISON DE PARTIES EN TÔLE À UN EMPILAGE DE TÔLES

(30) Priorität: 18.01.2018 EP 18152377
(43) Veröffentlichungstag der Anmeldung: 25.11.2020
(73) Patentinhaber: voestalpine Automotive Components Dettingen GmbH & Co. KG, 72581 Dettingen an der Erms (DE)
(72) Erfinder: LANKSWEIRT, Jochen, 89522 Heidenheim (DE); NANN, Axel, 70193 Stuttgart (DE)
(74) Vertreter: Jell, Friedrich
(86) Internationale Anmeldenummer: PCT/EP2019/051294
(87) Internationale Veröffentlichungsnummer: WO 2019/141826

(56) Entgegenhaltungen:
- WO-A1-2017/111249
- WO-A1-2017/159926
- WO-A1-2018/038357
- JP-A- S52 137 610
- JP-A- S57 128 906
- JP-A- S59 181 945
- JP-A- 2002 307 636
- JP-A- 2004 248 423

## Beschreibung

### Technisches Gebiet

Die Erfindung betrifft ein Verfahren zum Verbinden von Blechteilen nach dem Oberbegriff des Anspruchs 1.

### Stand der Technik

Um Blechpakete, welche eine Stapeleinrichtung eines Folgestanzwerkzeugs verlassen, voneinander zu lösen bzw. zu trennen, ist - dem Oberbegriff des Anspruchs 1 folgend - aus dem Stand der Technik bekannt (WO 2017/159926 A1), an einem endseitigen Blechteil eines jeden Blechpakets mehrere vorkragende Abstandshalter vorzusehen. Diese Abstandshalter werden vor dem Freistanzen des endseitigen Blechteils in einem ersten Teilbereich durch Hohlprägen erzeugt. Durch die vorkragenden Abstandshalter reduziert sich die Kontaktfläche zwischen den Blechteilen bzw. Blechpaketen in der Stapeleinrichtung, was die Festigkeit der stoffschlüssigen Verbindung bzw. Klebeverbindung -sei es physikalisch oder chemisch vernetzt- zwischen den Blechpaketen schwächt. Zwar erleichtern Abstandshalter dieses Stands der Technik das Lösen bzw. Trennen der Blechpakete voneinander, sie schränken aber die Anwendungsmöglichkeit der Blechpakete ein - dies unter anderem deshalb, weil derartige Abstandshalter den Anteil an magnetisch leitendem Material im Bauteil reduzieren. Dies ist besonders relevant, wenn mehrere solcher Blechpakete zu einem Bauteil zusammengefügt werden.

Aus diesem Grunde schlägt die WO 2016/0035959 A1 vor, nur an jenen Teilbereichen des Elektrobands Klebstoff vorzusehen, welche nach ihrem Abtrennen auch Blechteilen des jeweiligen Blechpakets zugehören. Auf ein Vorsehen von Klebstoff zwischen Blechteilen unterschiedlicher Blechpakete wird verzichtet - was ein Verkleben der Blechpakete in der Stapeleinrichtung vermeidet. Nachteilig bedarf es für die Reproduzierbarkeit des Verfahrens einer vergleichsweise aufwendigen Steuerung/Regelung - etwa, um eine Beeinträchtigung der Funktion des Folgestanzwerkzeugs durch, sich vom Elektroband ablösenden Klebstoff zu vermeiden.

### Darstellung der Erfindung

Die Erfindung hat sich daher die Aufgabe gestellt, ein Verfahren zum Verbinden von Blechteilen zu einem Blechpaket bereitzustellen, das sich durch einfache Handhabung auszeichnet - die damit hergestellten Blechpakete aber dennoch nicht in ihrer Anwendungsmöglichkeit einschränkt.

Die Erfindung löst die gestellte Aufgabe durch ein Verfahren gemäß Anspruch 1. Weitere vorteilhafte Ausgestaltungen der Erfindung sind den Unteransprüchen zu entnehmen.

Werden im ersten Teilbereich von beiden Flachseiten des Elektrobands vorkragende Abstandshalter durch Hohlprägen erzeugt, kann durch diesen ersten Teilbereich in der Stapeleinrichtung ein Verkleben zwischen den Blechpaketen standfest verhindert werden. Das erste Blechteil mit den beidseitigen vorkragenden Abstandshaltern kann damit nämlich als ein gegenüber den Blechpaketen separates Trennelement zwischen den verklebten Blechteilen vorgesehen werden - und so eine vollflächige Verklebung zwischen den Blechpaketen vermeiden. Auf diese Weise ist also eine geschwächte Verbindung von Blechteil und Abstandshalter erreichbar, während die Blechpakete selbst dicht gepackt sind und deren Blechteile vollflächig - also besonders standfest - miteinander verbunden sind.

Vorzugsweise werden im ersten Teilbereich von beiden Flachseiten des Elektrobands vorkragende und gleich ausgebildete Abstandshalter durch Hohlprägen erzeugt.

Die Blechpakete lassen sich sohin auf verfahrenstechnisch leichte, einfacher Weise voneinander lösen bzw. trennen - und zwar, ohne dabei eine geometrische Änderung an den Blechpakten befürchten zu müssen. Damit ist unter anderem die Einfachheit des Verfahrens sichergestellt, weil aufwändige Schritte - etwa in Bezug auf sich vom Elektroband ablösenden Klebstoff - hinfällig werden.

Zudem ist im Gegensatz zum Stand der Technik anhand der durch das erfindungsgemäße Verfahren hergestellten Blechpakete keine Einschränkung ihrer Anwendungsmöglichkeit nicht zu befürchten.

Werden die Abstandshalter in ihrer Breite auf mindestens Beschichtungshöhe der Klebstoffschicht hohlgeprägt, kann dies bereits ausreichen, dass die Abstandshalter einer vergleichsweise hohen Gewichtsbelastung standhalten und eine zuverlässige bzw. einfache Trennung der Blechpakete zulässt. Die kann die Reproduzierbarkeit kann durch das Verfahren somit weiter verbessern.

Werden die Abstandshalter in ihrer Breite auf mindestens Blechstärke des Elektrobands hohlgeprägt, kann ein mechanisch belastbares Trennelement geschaffen werden, um die gestapelten Blechpaketen standfest auf Abstand zu halten. Dies kann die Reproduzierbarkeit des Verfahrens weiter verbessern.

Beträgt die Breite der Abstandshalter mindestens 1 mm kann dies zu einer ausreichenden mechanischen Belastbarkeit des Trennelements führen. Dies insbesondere, wenn die Breite der Abstandshalter mindestens 1,5 mm ist.

Als ausreichend kann sich zudem herausstellen, wenn die Breite der Abstandshalter maximal das Fünffache der Blechstärke des Elektrobands beträgt.

Das Lösen der Blechpakete voneinander kann auf reproduzierbarere Weise erfolgen, wenn die Abstandshalter in ihrer Höhe auf mindestens Beschichtungshöhe der Klebstoffschicht hohlgeprägt werden. Derart kann beispielsweise ein ausreichender Abstand zwischen der Klebstoffbeschichtung und eines endseitigen Blechteils sichergestellt werden.

Beträgt die Höhe der Abstandshalter mindestens die doppelte Beschichtungshöhe der Klebstoffschicht, kann das Trennen der Blechpakete weiter erleichtert werden. Dies auch dann, wenn das Elektroblech beidseitig mit einer Klebstoffschicht beschichtet ist.

Vorzugsweise beträgt die Höhe der Abstandshalter maximal das Dreifache der Blechstärke des Elektrobands, um so für einen ausreichenden Abstand bei hoher Stapeldichte sorgen zu können.

Als ausreichend kann sich herausstellen, wenn die Höhe der Abstandshalter der Blechstärke des Elektrobands entspricht.

Entspricht der seitliche Abstand zwischen zwei nacheinander folgenden Abstandshaltern mindestens der geringsten Breite dieser Abstandshalter, kann dies der mechanischen Steifigkeit des Trennelements dienlich sein - und dessen Standfestigkeit weiter erhöhen. Derart wird die Reproduzierbarkeit des Verfahrens zusätzlich erhöhbar.

Das Lösen bzw. Trennen der Blechpakete kann weiter erleichtert werden, wenn der Abstandshalter im Querschnitt eine trapez-, halbrund- oder rechteckförmige Kontur aufweist. Eine halbrunde Kontur kann sich dabei besonders auszeichnen - etwa, um auch Beschädigungen an angrenzende Blechpakete verlässlich zu vermeiden. Derart ist die die Reproduzierbarkeit des Verfahrens weiter zu erhöhen.

Die Lage des Trennelements zwischen den gestapelten Blechpaketen kann auf sichere Weise eingestellt werden, wenn die Abstandshalter abwechselnd von beiden Flachseiten vorkragend erzeugt werden. Derart kann eine stabile Lage des Trennelements im Stapel mit den Blechteilen sichergestellt werden, was unter anderem ein Verkeilen der Blechteile in der Stapeleinrichtung vermeiden kann - und womit wiederum die Reproduzierbarkeit des Verfahrens erhöhbar ist.

Vorstehend Genanntes ist weiter verbesserbar, wenn jeweils zu einem Abstandshalter auf der ersten Flachseite eines ersten Teilbereichs zwei Abstandshalter auf der zweiten Flachseite dieses ersten Teilbereichs hohlgeprägt werden.

Werden die gestapelten Blechteile durch Aktivierung der Klebstoffschicht zu mehreren Blechpaketen verklebt, kann dies zu einer besonders belastbaren stoffschlüssigen Verbindung zwischen den Blechteilen und damit zu standfesten Blechpaketen führen - welche Blechpakete mithilfe des Trennelements aber trotzdem reproduzierbar voneinander lösbar sind. Eine, insbesondere thermische, Aktivierung der Klebstoffschicht ist vergleichsweise einfach handhabbar. Vorstellbar ist auch die Klebstoffschicht mit einem Aktivator, Beschleuniger etc. chemisch zu aktivieren.

Wird vor dem Freistanzen des ersten Blechteils ein Kopfabschnitt eines Abstandshalters abgetrennt, kann ein reduzierender Einfluss auf die Klebeneigung der Abstandshalter erreicht werden - womit die Trennung in Blechpakete weiter zu erleichtern ist.

### Kurze Beschreibung der Zeichnung

In den Figuren ist beispielsweise der Erfindungsgegenstand anhand einer Ausführungsvariante dargestellt. Es zeigen
- Fig. 1: eine schematische Ansicht auf eine Vorrichtung zur Blechpaketierung und
- Fig. 2: eine vergrößerte Ansicht auf ein freigestanztes Blechteil nach der Fig. 1.

### Weg zur Ausführung der Erfindung

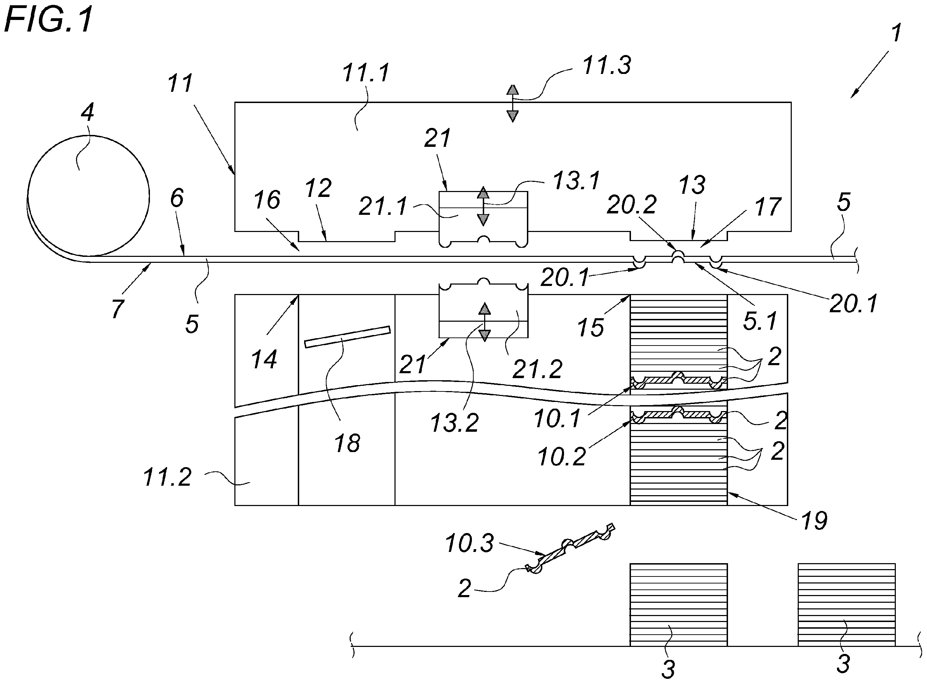

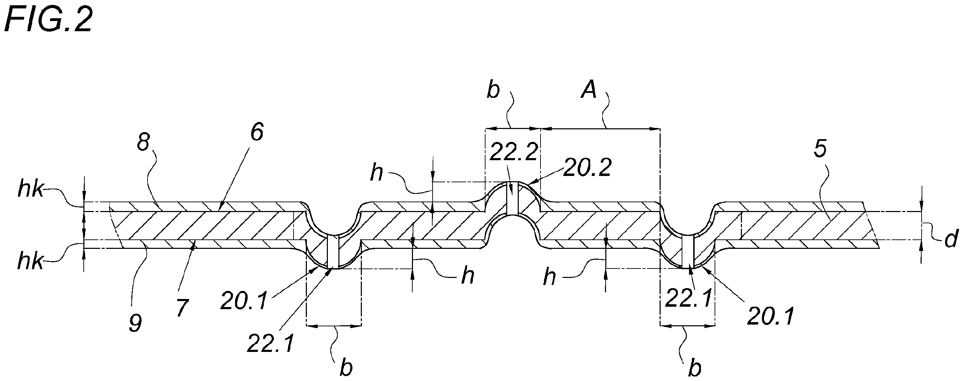

Gemäß dem Ausführungsbeispiel in Fig. 1 wird eine Vorrichtung 1 zur Durchführung des erfindungsgemäßen Verfahrens schematisch dargestellt. Diese Vorrichtung 1 dient zum Paketieren von freigestanzten Blechteilen 2 zu Blechpaketen 3. Hierzu wird von einem Coil 4 bzw. Bund ein Elektroband 5 abgehaspelt, welches auf einer oder beiden seiner Flachseiten 6, 7 eine vollflächige Klebstoffschicht 8, 9, nämlich heißhärtende Schmelzklebstoffschichten, aufweist - welche Klebstoffschicht 8, 9 beispielsweise in der Fig. 2 an einem aus dem Elektroband 5 freigestanzten ersten Blechteil 10 zu erkennen sind.

Vom beidseitig klebstoffbeschichteten Elektroband 5 werden mithilfe eines Stanzwerkzeugs 11 mehrere Blechteile 2 freigestanzt. Solch ein Freistanzten kann - im Allgemeinen erwähnt - ein Ausschneiden, Abschneiden, Ausklinken, Beschneiden, Zerteilen durch Ausdrücken etc. sein.

Wie außerdem der Fig. 1 zu entnehmen, führt das Stanzwerkzeug 11, beispielsweise hier ein Folgestanzwerkzeug, ein Schneiden mit mehren Hüben 11.3 durch, indem sein Oberwerkzeug 11.1 mit seinem Unterwerkzeug 11.2 zusammenwirkt. Mit einer ersten Schneide 12 des Oberwerkzeugs 11.1 wird das Elektroband 5 für ein Freistanzen vorbearbeitet - wonach mit einer zweiten Schneide 13 des Oberwerkzeugs 11.1 aus dem Elektroband 5 das Blechteil 2 freigestanzt bzw. damit vereinzelt wird. Solch ein Freigestanzten kann - im Allgemeinen erwähnt - ein Ausschneiden, Abschneiden, Ausklinken, Beschneiden, Zerteilen durch Ausdrücken etc. sein.

Die Schneiden 12, 13 wirken mit den jeweiligen Matrizen 14, 15 des Unterwerkzeugs 11.2 zusammen und bilden damit im Stanzwerkzeug 10 zwei Stanzstufen 16, 17 aus.

Solch ein Folgeschneiden ist in der Fig. 1 daran zu erkennen, dass beim Vorbearbeiten ein Teil 18 vom Elektroband 5 abgetrennt wird, um das Elektroband 5 für das Freistanzen der Blechteile 2 vorzubereiten. Danach werden mithilfe der Stanzstufe 17 die Blechteile 2 freigestanzt und durch Druck des Oberwerkzeugs 11.1 in eine Stapeleinrichtung 19 gedrängt und dort gestapelt. Hierzu weist die Stapeleinrichtung 19 eine sich teilweise verjüngende Führung im Unterwerkzeug 11.2 auf. Diese Führung übt die Wirkung einer Paketbremse auf die Blechteile 2 aus, wodurch die Blechteile 2 unter Druck des Oberwerkzeugs 11.2 und mithilfe der zwischen den Blechteilen 2 vorhandenen Klebstoffschicht 8, 9 eine physikalische Verbindung eingehen. Die Stapeleinrichtung 19 kann aktiv beheizt werden, um den Klebstoff zu aktivieren und zwischen den Blechteilen 2 eine stoffschlüssige Verbindung herzustellen. Im Allgemeinen wird erwähnt, dass - nicht dargestellt - auch ein Gegenhalter in der Führung vorstellbar ist, der einen entsprechenden Gegendruck zum Verkleben der Blechteile 2 ausübt. Ebenso ist vorstellbar, dass die Blechpakete 3 - nicht dargestellten - weiteren Aushärtungsschritten unterworfen werden können, um die Klebeverbindung zwischen den Blechteilen 2 zu stärken bzw. zu vernetzen.

Um die, die Stapeleinrichtung 19 verlassenden Blechpakete 3 leichter voneinander trennen zu können, wird das Elektroband 5 in einem ersten Teilbereich 5.1 durch Hohlprägen mehrerer vorkragender und gleich ausgebildete Abstandshalter 20.1, 20.2 vorbereitet - und zwar vor dem Freistanzen der Blechteile 2. Diese Vorbereitung erleichtert nach dem Freistanzen des ersten Blechteils 10 aus diesem ersten Teilbereich 5.1 ein Lösen der gestapelten und verklebten Blechteile 2 in Blechpakete 3.

Erfindungsgemäß werden im ersten Teilbereich 5.1 auf beiden Flachseiten 6, 7 des Elektrobands 5 vorkragende Abstandshalter 20.1, 20.2 durch Hohlprägen erzeugt. Damit dient das erste Blechteil 10 als ein gegenüber den Blechpaketen 3 separates Trennelement 10.1, 10.2, 10.3, was die Kontaktfläche zwischen den Blechpaketen 3 vermindert. Das erste Blechteil 10 wird zwischen den verklebten Blechteilen 2 vorgesehen und erleichtert damit das Lösen der Blechpakete 3 voneinander, welche Blechpakete 3 die Stapelreinrichtung 19 verlassen. Im Ausführungsbeispiel sind die Trennelemente 10.1, 10.2 in der Stapelreinrichtung 19 zu erkennen, wohingegen das Trennelement 10.3 nach Verlassen der Stapelreinrichtung 19 auf verfahrenstechnisch einfache Weise ausgeschieden wird - wie dies für die weiteren Trennelemente 10.1 und 10.2 ebenfalls vorgesehen ist. Die Blechpakete 3 selbst weisen demnach eine dichte Packung von Blechteilen 2 auf.

Die Vorbereitung des ersten Teilbereichs 5.1 erfolgt durch eine Prägeeinrichtung 21 mit Stempel 21.1 und Gegenstempel 21.2, welche beiden Stempel im Ober- bzw. Unterwerkzeug 11.1 bzw. 11.2 je nach Bedarf entlang einer jeweiligen Linearführung 13.1, 13.2 vor- und zurückbewegbar vorgesehen sind.

Die Abstandshalter 20.1, 20.2 weisen im Querschnitt eine halbrundförmige Kontur auf und kragen in Form eines Kugelsegments der Flachseite 6, 7 des Elektrobands 5 bzw. des ersten Blechteils 10 vor. Die Form eines Kugelsegments bewährt sich unter anderem, um die Oberfläche der Blechteile zu schonen.

Die Abstandshalter 20.1, 20.2 weisen eine Breite b und eine Höhe h auf - bzw. werden diese derart hohlgeprägt. Anhand dieser Höhe h kann beispielsweise ein ausreichender Abstand zwischen der Klebstoffbeschichtung und eines endseitigen Blechteils 2 sichergestellt werden. Anhand der Breite b kann für eine ausreichende mechanische Belastbarkeit der Abstandshalter 20.1, 20.2 beim Stapeln der Blechteile 2 gesorgt werden.

Das Elektroband 5 weist beispielsweise eine Blechstärke von 0,1 bis 1 mm, nämlich 0,7 mm, auf. Die Schichthöhe hk der Klebstoffschichten 8, 9 beträgt beispielsweise 2 bis 4 µm. Eine verfahrenstechnisch einfache Trennung in Blechpakete 3 durch die Trennelement 10.1, 10.2, 10.3 wird erreicht, wenn die Abstandshalter 20.1, 20.2 beispielsweise eine Breite b von 1,5 mm und eine Höhe h von 0,7 mm aufweisen.

Die Abstandshalter 20.1, 20.2 werden abwechselnd von beiden Flachseiten 7 bzw. 6 vorkragend erzeugt, wie dies in der Fig. 2 an abwechselnd nach unten und nach oben vorkragenden Abstandshaltern 20.1, 20.2 erkannt werden kann. Die Abstandshalter 20.1, 20.2 werden in einem Hohlprägeschritt erzeugt. Auf diese Weise ist die Lage des Trennelements zwischen den gestapelten Blechpaketen verbessert sicherzustellen. Wie Fig. 1 zu erkennen schließen an einen Abstandshalter 20.2 auf der ersten Flachseite 6 des ersten Teilbereichs (5.1) zwei Abstandshalter 20.1 auf der zweiten Flachseite 7 dieses ersten Teilbereichs (5.1) an, welche zweite Flachseite 7 der ersten Flachseite 6 gegenüberliegt.

Der Abstand A zwischen nebeneinanderliegenden Abstandshaltern 20.1, 20.2 bzw. 20.2, 20.1 entspricht mindestens der geringsten Breite b dieser Abstandshalter 20.1, 20.2.

Zudem ist in Fig. 2 zu erkennen, dass vor dem Freistanzen des ersten Blechteils 2 alle Abstandshalter 20.1, 20.2 einen abgetrennten Kopfabschnitt 22.1, 22.2 aufweisen. Dies wird beispielsweise durch Lochen des Elektrobands 5 vor, während oder nach dem Hohlprägen der Abstandshalter 20.1, 20.2 durchgeführt. Vorzugsweise wird der Abstandshalter 20.1, 20.2 gelocht, um dessen Kopfabschnitt 22.2, 22.2 abzutrennen.

Damit kann die aktivierbare Klebstoffschicht 8, 9 an den diesbezüglichen Abstandshaltern 20.1, 20.2 - beispielsweise verfahrenstechnisch einfach gelöst - reduziert werden, was das Trennen der Blechpakete 3 weiter erleichtert.

## Patentansprüche

1. Verfahren zum Verbinden von Blechteilen (2) zu einem Blechpaket (3), bei dem
Blechteile (2) von einem, an zumindest einer seiner Flachseiten (6, 7) mit einer aktivierbaren Klebstoffschicht (8, 9), insbesondere Schmelzklebelackschicht, beschichteten Elektroband (5) freigestanzt werden,
die freigestanzten Blechteile (2) gestapelt und zu Blechpaketen (3) verklebt werden, wobei
vor dem Freistanzen von Blechteilen (2) das Elektroband (5) in einem ersten Teilbereich (5.1) hohlgeprägt wird, wodurch mehrere auf mindestens einer Flachseite (6, 7) des Elektrobands (5) vorkragende Abstandshalter (20.1, 20.2) erzeugt werden, mithilfe welcher Abstandshalter (20.1, 20.2) nach dem Freistanzen eines ersten Blechteils (2) aus diesem ersten Teilbereich (5.1) ein Lösen der gestapelten und verklebten Blechteile (2) in Blechpakete (3) erleichtert wird,
**dadurch gekennzeichnet, dass**
im ersten Teilbereich (5.1) von beiden Flachseiten (6, 7) des Elektrobands (5) vorkragende Abstandshalter (20.1, 20.2) durch Hohlprägen erzeugt werden, und dass
das erste Blechteil (2) mit den beidseitigen vorkragenden Abstandshaltern als ein gegenüber den Blechpaketen (3) separates Trennelement (10.1, 10.2, 10.3) zwischen den miteinander verklebten Blechteilen (2) vorgesehen wird.

2. Verfahren nach Anspruch 1, **dadurch gekennzeichnet, dass** die Abstandshalter (20.1, 20.2) in ihrer Breite (b) auf mindestens Beschichtungshöhe (hk) der Klebstoffschicht (8, 9) hohlgeprägt werden.

3. Verfahren nach Anspruch 2, **dadurch gekennzeichnet, dass** die Abstandshalter (20.1, 20.2) in ihrer Breite (b) auf mindestens Blechstärke (d) des Elektrobands (5) hohlgeprägt werden.

4. Verfahren nach Anspruch 2 oder 3, **dadurch gekennzeichnet, dass** die Breite (b) der Abstandshalter (20.1, 20.2) mindestens 1 mm, insbesondere mindestens 1,5 mm, beträgt.

5. Verfahren nach Anspruch 2, 3 oder 4, **dadurch gekennzeichnet, dass** die Breite (b) der Abstandshalter (20.1, 20.2) maximal das Fünffache der Blechstärke (d) des Elektrobands (5) beträgt.

6. Verfahren nach einem der Ansprüche 1 bis 5, **dadurch gekennzeichnet, dass** die Abstandshalter (20.1, 20.2) in ihrer Höhe (h) auf mindestens Beschichtungshöhe (hk) der Klebstoffschicht (8, 9) hohlgeprägt werden.

7. Verfahren nach Anspruch 6, **dadurch gekennzeichnet, dass** die Höhe (h) der Abstandshalter (20.1, 20.2) mindestens die doppelte Beschichtungshöhe (hk) der Klebstoffschicht (8, 9) beträgt.

8. Verfahren nach Anspruch 6 oder 7, **dadurch gekennzeichnet, dass** die Höhe (h) der Abstandshalter (20.1, 20.2) maximal das Dreifache der Blechstärke (d) des Elektrobands (5) beträgt.

9. Verfahren nach Anspruch 6, 7 oder 8, **dadurch gekennzeichnet, dass** die Höhe (h) der Abstandshalter (20.1, 20.2) der Blechstärke (d) des Elektrobands (5) entspricht.

10. Verfahren nach einem der Ansprüche 1 bis 9, **dadurch gekennzeichnet, dass** der seitliche Abstand (A) zwischen zwei nacheinander folgenden Abstandshaltern (20.1, 20.2) mindestens der geringsten Breite (b) dieser Abstandshalter (20.1, 20.2) entspricht.

11. Verfahren nach einem der Ansprüche 1 bis 10, **dadurch gekennzeichnet, dass** der Abstandshalter (20.1, 20.2) im Querschnitt eine trapez-, halbrund- oder rechteckförmige Kontur aufweist.

12. Verfahren nach einem der Ansprüche 1 bis 11, **dadurch gekennzeichnet, dass** die Abstandshalter (20.1, 20.2) abwechselnd von beiden Flachseiten (6, 7) vorkragend erzeugt werden.

13. Verfahren nach einem der Ansprüche 1 bis 12, **dadurch gekennzeichnet, dass** jeweils zu einem Abstandshalter (20.2) auf der ersten Flachseite (6) eines ersten Teilbereichs (5.1) zwei Abstandshalter (20.1) auf der zweiten Flachseite (7) dieses ersten Teilbereichs (5.1) hohlgeprägt werden.

14. Verfahren nach einem der Ansprüche 1 bis 13, **dadurch gekennzeichnet, dass** die gestapelten Blechteile (2) durch, insbesondere thermische, Aktivierung der Klebstoffschicht (8, 9) zu mehreren Blechpaketen (3) verklebt werden.

15. Verfahren nach einem der Ansprüche 1 bis 14, **dadurch gekennzeichnet, dass** vor dem Freistanzen des ersten Blechteils (2) ein Kopfabschnitt (22.1, 22.2) eines Abstandshalters (20.1, 20.2) abgetrennt wird.

## Claims

1. A method for connecting sheet metal parts (2) to form a lamination stack (3) in which
sheet metal parts (2) are stamped out from an electric strip (5) that is coated with an activatable adhesive layer (8, 9), more particularly a hot-melt adhesive layer, on at least one of its flat sides (6, 7) and
the stamped-out sheet metal parts (2) are stacked and glued to form lamination stacks (3), wherein
before the sheet metal parts (2) are stamped out, the electric strip (5) is embossed in a first sub-region (5.1), which produces multiple protruding spacers (20.1, 20.2) on at least one flat side (6, 7) of the electrical strip (5),
which spacers (20.1, 20.2), after a first sheet metal part (2) is stamped out from this first sub-region (5.1), facilitate a detachment of the stacked and glued sheet metal parts (2) into lamination stacks (3),
**characterized in that**
in the first sub-region (5.1), spacers (20.1, 20.2) protruding from both flat sides (6, 7) of the electric strip (5) are produced by means of embossing, and **in that** the first sheet metal part (2) with the spacers (20.1, 20.2) protruding from both sides is provided as a dividing element (10.1, 10.2, 10.3) that is separate from the lamination stacks (3) and is positioned between the sheet metal parts (2) that are glued to one another.

2. The method according to claim 1, **characterized in that** in terms of their width (b), the spacers (20.1, 20.2) are embossed to at least the coating thickness (hk) of the adhesive layer (8, 9).

3. The method according to claim 2, **characterized in that** in terms of their width (b), the spacers (20.1, 20.2) are embossed to at least the sheet thickness (d) of the electrical strip (5).

4. The method according to claim 2 or 3, **characterized in that** the width (b) of the spacers (20.1, 20.2) is at least 1 mm, more particularly at least 1.5 mm.

5. The method according to claim 2, 3, or 4, **characterized in that** the width (b) of the spacers (20.1, 20.2) is at most five times the sheet thickness (d) of the electrical strip (5).

6. The method according to one of claims 1 to 5, **characterized in that** in terms of their height (h), the spacers (20.1, 20.2) are embossed to at least the coating thickness (hk) of the adhesive layer (8, 9).

7. The method according to claim 6, **characterized in that** the height (h) of the spacers (20.1, 20.2) is at least twice the coating thickness (hk) of the adhesive layer (8, 9).

8. The method according to claim 6 or 7, **characterized in that** the height (h) of the spacers (20.1, 20.2) is at most three times the sheet thickness (d) of the electrical strip (5).

9. The method according to claim 6, 7, or 8, **characterized in that** the height (h) of the spacers (20.1, 20.2) corresponds to the sheet thickness (d) of the electrical strip (5).

10. The method according to one of claims 1 to 9, **characterized in that** the lateral spacing (A) between two successive spacers (20.1, 20.2) corresponds to at least the smallest width (b) of these spacers (20.1, 20.2).

11. The method according to one of claims 1 to 10, **characterized in that** the cross-section of the spacer (20.1, 20.2) has a trapezoidal, semicircular, or rectangular contour.

12. The method according to one of claims 1 to 11, **characterized in that** the spacers (20.1, 20.2) are produced so that they protrude in alternating fashion from both flat sides (6, 7).

13. The method according to one of claims 1 to 12, **characterized in that** for each spacer (20.2) on the first flat side (6) of a first sub-region (5.1), two spacers (20.1) are embossed on the second flat side (7) of this first sub-region (5.1).

14. The method according to one of claims 1 to 13, **characterized in that** the stacked sheet metal parts (2) are glued to form a plurality of lamination stacks (3) through activation, more particularly thermal activation, of the adhesive layer (8, 9).

15. The method according to one of claims 1 to 14, **characterized in that** a head section (22.1, 22.2) of a spacer (20.1, 20.2) is detached before the first sheet metal part (2) is stamped out.

## Revendications

1. Procédé pour l'assemblage de pièces de tôle (2) en paquets de tôles (3), dans lequel
des pièces de tôle (2) sont séparées à l'emporte-pièce d'un feuillard magnétique (5) revêtu sur au moins un de ses côtés plats (6, 7) d'une couche d'adhésif activable (8, 9), en particulier d'une couche d'adhésif thermofusible,
des pièces de tôle (2) séparées à l'emporte-pièce sont empilées et collées pour former des paquets de tôles (3),
dans lequel, avant la séparation de pièces de tôle (2), le feuillard magnétique (5) est embouti en creux dans une première zone (5.1), ce qui produit plusieurs cales d'écartement (20.1, 20.2) qui dépassent sur au moins un côté plat (6, 7) du feuillard magnétique (5), les cales d'écartement (20.1, 20.2) facilitant, après la séparation d'une première pièce de tôle (2) de cette première zone (5.1), le détachement des pièces de tôle (2) empilées et collées en paquets de tôle (3),
**caractérisé en ce que** des cales d'écartement (20.1, 20.2) qui dépassent des deux surfaces plates (6, 7) du feuillard magnétique (5) dans cette première zone (5.1) sont produites par emboutissage en creux et **en ce que**
la première pièce de tôle (2) avec les cales d'écartement qui dépassent des deux côtés est destinée à servir d'élément de séparation (10.1, 10.2, 10.3) séparé des paquets de tôle (3) entre les pièces de tôle (2) collées entre elles.

2. Procédé selon la revendication 1, **caractérisé en ce que** les cales d'écartement (20.1, 20.2) sont embouties en creux dans leur largeur (b) jusqu'à au moins la hauteur d'application (hk) de la couche d'adhésif (8, 9).

3. Procédé selon la revendication 2, **caractérisé en ce que** les cales d'écartement (20.1, 20.2) sont embouties en creux dans leur largeur (b) jusqu'à au moins l'épaisseur de tôle (d) du feuillard magnétique (5).

4. Procédé selon la revendication 2 ou 3, **caractérisé en ce que** la largeur (b) des cales d'écartement (20.1, 20.2) est d'au moins 1 mm, en particulier d'au moins 1,5 mm.

5. Procédé selon la revendication 2, 3 ou 4, **caractérisé en ce que** la largeur (b) des cales d'écartement (20.1, 20.2) est au maximum de cinq fois l'épaisseur de tôle (d) du feuillard magnétique (5).

6. Procédé selon l'une des revendications 1 à 5, **caractérisé en ce que** les cales d'écartement (20.1, 20.2) sont embouties en creux dans leur hauteur (h) jusqu'à au moins la hauteur d'application (hk) de la couche d'adhésif (8, 9).

7. Procédé selon la revendication 6, **caractérisé en ce que** la hauteur (h) des cales d'écartement (20.1, 20.2) correspond au moins au double de la hauteur d'application (hk) de la couche d'adhésif (8, 9).

8. Procédé selon la revendication 6 ou 7, **caractérisé en ce que** la hauteur (h) des cales d'écartement (20.1, 20.2) correspond au maximum au triple de l'épaisseur de tôle (d) du feuillard magnétique (5).

9. Procédé selon la revendication 6, 7 ou 8, **caractérisé en ce que** la hauteur (h) des cales d'écartement (20.1, 20.2) correspond à l'épaisseur de tôle (d) du feuillard magnétique (5).

10. Procédé selon l'une des revendications 1 à 9, **caractérisé en ce que** la distance latérale (A) entre deux cales d'écartement (20.1, 20.2) successives correspond au moins à la plus faible largeur (b) de ces cales d'écartement (20.1, 20.2).

11. Procédé selon l'une des revendications 1 à 10, **caractérisé en ce que** le contour de la cale d'écartement (20.1, 20.2) est en forme de trapèze, de demi-cercle ou de rectangle.

12. Procédé selon l'une des revendications 1 à 11, **caractérisé en ce que** les cales d'écartement (20.1, 20.2) sont créées alternativement en relief sur les deux côtés plats (6, 7).

13. Procédé selon l'une des revendications 1 à 12, **caractérisé en ce que**, pour chaque cale d'écartement (20.2) sur le premier côté plat (6) d'une première zone (5.1), deux cales d'écartement (20.1) sont embouties en creux sur le deuxième côté plat (7) de cette première zone (5.1).

14. Procédé selon l'une des revendications 1 à 13, **caractérisé en ce que** les pièces de tôle (2) empilées sont collées pour former plusieurs paquets de tôles (3) par l'activation, en particulier thermique, de la couche d'adhésif (8, 9).

15. Procédé selon l'une des revendications 1 à 14, **caractérisé en ce que** le sommet (22.1, 22.2) d'une cale d'écartement (20.1, 20.2) est découpé avant la séparation de la première pièce de tôle (2).
